# EUROPÄISCHE PATENTSCHRIFT

(11) **EP 4 128 441 B1**
(45) Veröffentlichungstag und Bekanntmachung des Hinweises auf die Patenterteilung: **13.03.2024**
(21) Anmeldenummer: 21716973.9
(22) Anmeldetag: 25.03.2021
(51) Int. Cl.: H01R 13/00, B60L 53/16, B60L 53/302, H01R 24/38

(54) **STECKKONTAKT**
PLUG CONTACT
PLOT

(30) Priorität: 31.03.2020 DE 102020108812
(43) Veröffentlichungstag der Anmeldung: 08.02.2023
(73) Patentinhaber: Phoenix Contact e-Mobility GmbH, 32816 Schieder-Schwalenberg (DE)
(72) Erfinder: FÜHRER, Thomas, 32825 Blomberg (DE)
(74) Vertreter: Meyer-Graefe, Karsten
(86) Internationale Anmeldenummer: PCT/EP2021/057693
(87) Internationale Veröffentlichungsnummer: WO 2021/197998

(56) Entgegenhaltungen:
- CN-A- 109 334 485
- CN-U- 209 921 090
- DE-A1-102017 222 872
- DE-A1-102019 110 241
- US-A1- 2016 197 424
- US-A1- 2017 054 234

## Beschreibung

Die Erfindung betrifft einen Steckkontakt für einen elektrischen Ladesteckverbinder. Weiterhin betrifft die Erfindung einen elektrischen Ladesteckverbinder zum Aufladen eines Elektrofahrzeugs, aufweisend einen hierin beschriebenen Steckkontakt.

Derartige Steckkontakte können in elektrischen Ladesteckverbindern zum Aufladen von Elektrofahrzeugen zum Einsatz kommen. Beispielsweise können solche Ladesteckverbinder Typ-2 Stecker sein, oder Stecker nach dem Combined Charging System, CCS, die auf einem Typ-2 Stecker basieren und mit zwei zusätzlichen Gleichstrom-Steckerpolen erweitert sind. Die Steckervarianten nach dem Combined Charging System sind in der Norm IEC 62196 beschrieben. Derartige Stecker-Typen werden beispielsweise für Ladebereiche mit einer Leistung von bis zu 240 Kilowatt und darüber, beziehungsweise mit einem maximalen Strom von 400 A und darüber für Schnellladungen mit Gleichstrom eingesetzt.

Das Konzept der Elektromobilität dehnt sich auf immer anspruchsvollere Anwendungen aus, für die Batterien mit einer Kapazität und Größe verwendet werden, die sich erheblich von denen in PKWs unterscheiden. Beispiele für derartige Anwendungen sind Fahrzeuge im Schwerlastverkehr oder Fahrzeuge mit sehr hohen Leistungen, wie sie beispielsweise in Bergwerken genutzt werden. Um Ladezeiten zum elektrischen Aufladen dieser Fahrzeuge zu ermöglichen, die sich in einem vertretbaren Rahmen bewegen, sind sehr hohe Ladeströme erforderlich. Aufgrund der Ausweitung der Elektromobilität auf immer weitere und umfangreiche Bereiche, ist zukünftig ein noch weiteres Ansteigen der maximalen Ladeströme zu erwarten. Dies führt, aufgrund der unvermeidlichen Stromwärmeverluste, zu steigenden thermischen Belastungen der betroffenen Bauteile.

Ein Beispiel für kritische Bauteile sind die Steckkontakte an den Ladesteckverbindern, da über die Steckkontakte die hohen Ladeströme fließen. Mit steigenden Ladeströmen sind die Steckkontakte auch steigenden thermischen Belastungen ausgesetzt. Durch die ohmschen Verluste der Steckkontakte, sowie durch die Übergangswiderstände an den Steckkontakten entsteht Wärme, die abgeführt werden muss, damit die betroffenen Bauteile nicht durch die entstehende Wärme beschädigt werden.

Um die Leistungsfähigkeit der Steckkontakte zu steigern, ist aus dem Stand der Technik bekannt, die Steckkontakte mittels eines Kühlfluidkreislaufes zu kühlen. Beispielsweise beschreibt die DE 20 2016 008 631 U1 einen Steckkontakt, welcher über ein Anschlussteil mit einem elektrischen Kabel verbunden ist. In dem Anschlussteil sind Hohlräume vorhanden, in die Kühlflüssigkeit strömen und dabei Wärme aufnehmen und abführen kann. Weiterhin ist in der CN 207116763 U ein Steckkontakt mit einer starren Öffnung zum Einklemmen eines korrespondierenden Steckkontakts beschrieben, wobei der Bereich um die Öffnung mit einem Kühlfluid umströmt ist. Ferner ist in der DE 10 2019 110 241 A1 ein weiterer Steckkontakt beschrieben.

Die aus dem Stand der Technik bekannten Steckkontakte haben den Nachteil, dass federgelagerte Bereiche der Steckkontakte, die der unmittelbaren Verbindung mit einem korrespondierenden Steckkontakt dienen, nur unzureichend gekühlt werden.

Aufgabe der vorliegenden Erfindung ist es, einen Steckkontakt mit einer verbesserten Kühlung bereitzustellen.

Diese Aufgabe wird durch einen Gegenstand mit den Merkmalen des Anspruchs 1 gelöst.

Danach wird ein Steckkontakt für einen elektrischen Ladesteckverbinder bereitgestellt, aufweisend:
ein Kontaktelement, aufweisend einen Kontaktbereich mit zumindest einem federgelagerten Kontaktmittel, und einen Anschlussbereich zum Anschluss eines elektrischen Leiters;
ein Kühlelement angeordnet zumindest bereichsweise um den Kontaktbereich; und ein Wärmeleitelement angeordnet zwischen dem Kühlelement und dem Kontaktelement, wobei das Wärmeleitelement elastisch ausgebildet ist und das Kühlelement und das Kontaktelement thermisch und mechanisch kontaktiert.

Das Kontaktelement kann beispielsweise ein elektrisch leitfähiges Material, wie ein Kupfermaterial, umfassen. An einem ersten Ende des Kontaktelements kann ein elektrischer Leiter an den Anschlussbereich, beispielsweise über eine Klemm- oder Schraubverbindung, angeschlossen werden. An einem dem ersten Ende gegenüberliegenden zweiten Ende, kann ein Bereich eines korrespondierenden Steckkontaktes mit dem zumindest einen federgelagerten Kontaktmittel elektrisch kontaktiert werden, um eine elektrische Verbindung herzustellen. Der Begriff "federgelagertes Kontaktmittel" kann hierin auch als Kontaktfederarm, beispielsweise als Kontaktfederarm eines Buchsenkontakts, verstanden werden. In einem Beispiel kann das federgelagerte Kontaktmittel aus einem sehr gut elektrisch leitenden Werkstoff ausgebildet sein oder mit einem solchen Werkstoff beschichtet sein, wie beispielsweise einer Silber- oder Goldlegierung. Der Bereich an einem, beispielsweise, stiftförmig oder zungenförmig ausgebildeten, korrespondierenden Steckkontakt, kann zwischen mehreren Kontaktfederarmen eingeklemmt sein und hierdurch mechanisch und elektrisch kontaktiert sein. Hierfür können bei der Kontaktierung des korrespondierenden Steckkontakts, die Kontaktfedern von dem korrespondierenden Steckkontakt zunächst wegbewegt werden und danach mit einer Federkraft auf dem Bereich des korrespondierenden Steckkontakts aufliegen.

Das Kühlelement kann über das Kontaktelement geschoben werden. Auch kann das Kühlelement zumindest bereichsweise von einem Kühlfluid durchströmt sein. Alternativ oder zusätzlich kann das Kühlelement auch einen elektrothermischen Wandler, wie beispielsweise ein Peltier-Element umfassen, um Wärme von dem Kontaktbereich abzuführen.

Unter dem Begriff "Wärmeleitelement" kann hierin ein Element verstanden werden, das zwischen dem Kühlelement und dem Kontaktelement angeordnet werden kann. Abhängig von der Ausgestaltung des Kontaktelements und des Kühlelements kann das Wärmeleitelement auch anders ausgestaltet sein, so dass das Wärmeleitelement in einem Bereich zwischen Kontaktelement und Kühlelement angeordnet werden kann und diesen Bereich ausfüllen kann. Weiterhin kann das Wärmeleitelement ein wärmeleitfähiges Material umfassen, das die Wärme an dem Kontaktelement zu dem Kühlelement transportieren kann. Das wärmeleitfähige Material kann insofern elastisch ausgestaltet sein, dass das federgelagerte Kontaktelement beim Stecken eines korrespondierenden Steckkontakts, beispielsweise eines Stiftkontaktes oder eines Flachkontaktes, einen Federweg radial nach außen in Richtung des wärmeleitfähigen Material zurücklegen kann, ohne dass es zu einem wesentlichen Anstieg der Stecknormalkraft des Steckkontakts kommt.

Vorteilhaft kann durch den beschriebenen Aufbau des Steckkontakts, zusätzlich zu dem axialen Wärmetransport vom Kontaktbereich zu dem Anschlussbereich des Kontaktelements, auch noch Wärme vom Kontaktbereich an das Kühlelement über das Wärmeleitelement abgegeben werden. Hierdurch wird eine verbesserte Kühlung des federgelagerten Kontaktmittels erreicht und somit kann die Stromtragfähigkeit des Steckkontakts verbessert werden.

In einem Beispiel ist das Kontaktelement als Buchsenkontakt ausgebildet zum Halten eines Bereichs eines in dem Kontaktbereich anordenbaren korrespondierenden Steckkontakts, insbesondere eines Stiftkontaktes oder eines Flachkontaktes.

Zum Herstellen einer elektrischen Verbindung, kann beispielsweise der Buchsenkontakt mit einem korrespondierenden Stiftkontakt oder Flachkontakt verbunden werden. Der Anschlussbereich des Buchsenkontakts kann als Crimpanschluss ausgeführt sein. Alternativ kann der Anschlussbereich des Buchsenkontakts auch als Schraubklemmanschluss oder verzinnt ausgeführt sein.

In einem Beispiel weist der Kontaktbereich eine Vielzahl federgelagerter Kontaktmittel, auf insbesondere weist der Kontaktbereich eine Vielzahl von Kontaktlamellen auf.

Abhängig von der Ausführung des Buchsenkontakts zum Halten eines Bereichs eines in dem Kontaktbereich anordenbaren Stiftkontaktes oder eines Flachkontaktes, können die federgelagerten Kontaktmittel entsprechend angeordnet sein. Beispielsweise können die federgelagerten Kontaktmittel ringförmig zum Halten eines runden Stiftkontaktes, oder in einer oder mehreren Reihen zum Halten eines rechteckigen Flachkontakts angeordnet sein.

Beispielsweise kann der Ladestrom über eine Vielzahl von Lamellenstegen übertragen werden. Vorteilhaft kann hierdurch der Übergangswiderstand des Gesamtkontaktes minimiert werden, was eine geringe Verlustleistung und damit eine geringere Wärmeentwicklung zur Folge hat.

In einem Beispiel sind das Kühlelement und das Wärmeleitelement hülsenförmig ausgebildet.

Unter dem Begriff "hülsenförmig" kann hierin eine Ausgestaltung des Kühlelements und des Wärmeleitelements als runde, innen hohle und längliche Elemente verstanden werden. Beispielswiese kann das hülsenförmige Kühlelement über das Kontaktelement geschoben werden und das hülsenförmige Wärmeleitelement zwischen dem hülsenförmigen Kühlelement und dem Kontaktbereich des Kontaktelements angeordnet werden.

In einem Beispiel sind das Kühlelement und das Wärmeleitelement koaxial um den Kontaktbereich des Kontaktelements angeordnet.

Vorteilhaft kann durch eine koaxiale Anordnung des Kühlelements um den Kontaktbereich die Wärme gleichmäßig von dem Kontaktbereich abgeführt werden.

In einem Beispiel sind das Kühlelement und/oder das Wärmeleitelement rechteckig ausgebildet.

Beispielsweise können das rechteckig ausgebildete Kühlelement und das rechteckig ausgebildete Wärmeleitelement in einem kastenförmigen Buchsenkontakt, zum Halten eines rechteckigen Flachkontakts, verwendet werden. Auch kann das Wärmeleitelement mehrteilig ausgebildet sein, beispielsweise aus mehreren Platten ausgebildet sein, die zwischen Kühlelement und dem Kontaktbereich zumindest bereichsweise angeordnet werden können.

In einem Beispiel umfasst das Kühlelement zumindest einen Kanal in einem Material des Kühlelements, zum Durchströmen mit einem Kühlfluid.

Unter dem Begriff "Kanal" kann hierin eine Leitung, Ausnehmung, Öffnung und/oder Bohrung in dem Material des Kühlelements verstanden werden, durch die ein Kühlfluid, beispielsweise eine Kühlflüssigkeit oder ein Gas, strömen kann. In Beispielen kann der Kanal ein Kanalsystem mit mehreren Abzweigungen umfassen und kann spiralförmig und/oder parallel mit über den Verlauf des Kanals gleichbleibenden oder unterschiedlichen Dimensionen verlaufen, um hierdurch abhängig von der spezifischen Ausgestaltung den Kontaktbereich des Kontaktelements effizient kühlen zu können. In einem Beispiel kann das Kühlelement ein wärmeleitfähiges Material, wie zum Beispiel ein Metall oder einen wärmeleitfähigen Kunststoff umfassen.

In einem Beispiel umfasst das Kühlelement zumindest zwei Kanalanschlüsse.

In dem Kühlelement können Öffnungen an den Endbereichen des Kanals eingebracht sein, um durch den Kanal das Kühlfluid zu befördern. Beispielsweise können die Kanalanschlüsse durch Rohrstutzen auf den Endbereichen gebildet sein. Die Rohrstutzen können beispielsweise einen Flansch aufweisen, auf den Rohrleitungen aufgesteckt und gehalten werden können, die das Kühlfluid befördern. In Beispielen kann eine Pumpe das Kühlfluid durch den Kanal pumpen. Auch kann in Beispielen, das Kühlelement mehr als zwei Kanalanschlüsse aufweisen, wenn beispielsweise verschiedene Kühlkreisläufe in dem Kühlelement realisiert sind. Auch können die Kühlanschlüsse entlang der Ausdehnungsrichtung des Kühlelements axial nebeneinander angeordnet sein, oder radial voneinander beabstandet an dem Kühlelement angeordnet sein.

In einem Beispiel ist das Kühlelement doppelwandig ausgestaltet und der Kanal verläuft zwischen einer Innenwand und einer Außenwand des Kühlelements.

Beispielsweise kann ein Zwischenraum als Kanal zwischen den Außenflächen des Kühlelements in dem Material des Kühlelements angeordnet sein, um möglichst große Bereiche der Außenflächen für die Kühlung zu nutzen.

In einem Beispiel ist das Kühlelement mehrteilig ausgestaltet.

Beispielsweise kann das Kühlelement aus zwei oder mehreren Teilen ausgestaltet sein und die einzelnen Teile können aus unterschiedlichen Materialen gefertigt sein. Vorteilhaft kann somit ein modular aufgebautes Kühlelement realisiert werden, das abhängig von dem gewünschten Einsatzgebiet individuell für ein Kontaktelement zusammengestellt werden kann.

In einem Beispiel umfasst das Kühlelement einen ersten Kühlkörper angeordnet zumindest bereichsweise um den Kontaktbereich, wobei der erste Kühlkörper ein Vollmaterial umfasst, und einen zweiten Kühlkörper aufweisend den Kanal zum Durchströmen mit dem Kühlfluid, wobei der zweite Kühlkörper in einem thermischen Kontakt mit dem ersten Kühlkörper steht.

Zum Beispiel kann der Kanal in dem zweiten Bereich des Kühlkörpers um den Anschlussbereich verlaufen, um diesen effizient zu kühlen und der Kontaktbereich kann mittels des ersten Kühlkörpers gekühlt werden.

In einem Beispiel umfasst das das Wärmeleitelement ein keramikgefülltes Kunststoffmaterial, ein Gewebe aus Metalldrähten oder ein Vlies aus Metalldrähten.

Vorteilhaft weisen diese Materialien eine hohe Wärmeleitfähigkeit, sowie gute elastische Eigenschaften auf. Das keramikgefüllte Kunststoffmaterial kann beispielsweise ein Verbundwerkstoff auf Basis eines Polymers sein, das mit Keramik gefüllt ist. Ein derartiges Material kann einfach in Form gebracht werden und somit genau in den Bereich zwischen dem Kontaktelement und dem Kühlelement eingepasst werden. Weiterhin verlängert die in dem Kunststoffmaterial eingebrachte Keramik den Diffusionsweg von Flüssigkeiten, was wiederum den Kontaktbereich zusätzlich schützt.

Die Erfindung bezieht sich auch auf einen elektrischen Ladesteckverbinder zum Aufladen eines Elektrofahrzeugs, aufweisend zumindest einen hierein beschriebenen Steckkontakt.

Der elektrische Ladesteckverbinder kann in weiteren Beispielen die bezüglich des Steckkontakts beschriebenen Merkmale aufweisen.

Der der Erfindung zugrunde liegende Gedanke soll nachfolgend anhand von in den Figuren dargestellten Ausführungsbeispielen näher erläutert werden. Es zeigen:
- Fig. 1A, 1B: Explosionsdarstellungen eines Steckkontakts gemäß einer ersten Ausführungsform;
- Fig. 2: eine Darstellung eines Steckkontakts gemäß der ersten Ausführungsform in einem zusammengebauten Zustand;
- Fig. 3A, 3B: Schnittdarstellungen eines Steckkontakts gemäß der ersten Ausführungsform;
- Fig. 4A, 4B: Explosionsdarstellungen eines Steckkontakts gemäß einer zweiten Ausführungsform;
- Fig. 5: eine Darstellung eines Steckkontakts gemäß der zweiten Ausführungsform in einem zusammengebauten Zustand;
- Fig. 6: eine Schnittdarstellung eines Steckkontakts gemäß der zweiten Ausführungsform;
- Fig. 7A - 7C: Darstellungen eines Steckkontakts gemäß einer dritten Ausführungsform; und
- Fig. 8: eine Ansicht eines Ladesteckverbinders gemäß einer Ausführungsform.

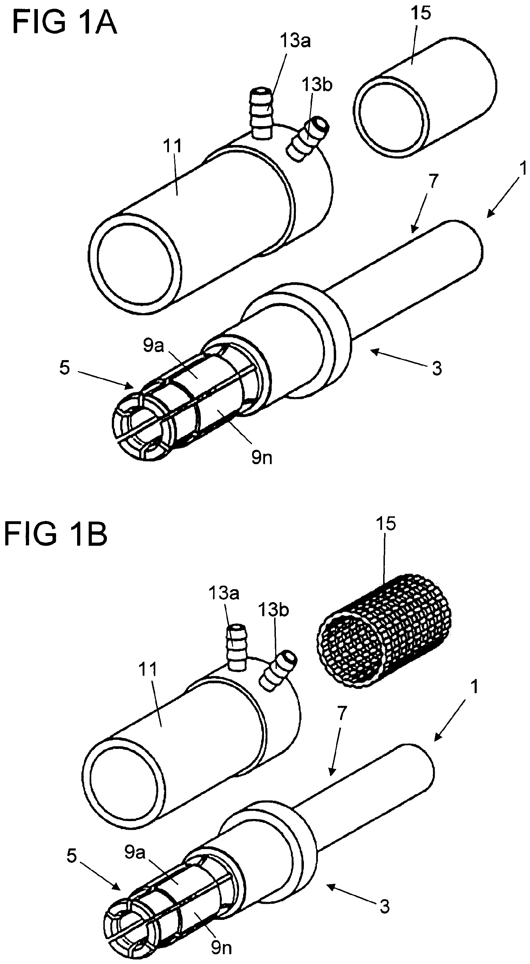

Figur 1A zeigt eine Ansicht eines Steckkontakts 1 gemäß einer ersten Ausführungsform. Gezeigt wird eine Explosionsdarstellung des Steckkontakts 1, in der die dargestellten Einzelteile im Wesentlichen räumlich voneinander getrennt gezeigt sind.

Der gezeigte Steckkontakt 1 umfasst ein Kontaktelement 3 mit einem Kontaktbereich 5 und einem Anschlussbereich 7. In der gezeigten Ausführungsform umfasst das Kontaktelement 3 ein elektrisch leitfähiges Material und kann an dem Anschlussbereich 7 mit einem elektrischen Leiter verbunden werden. An dem Kontaktbereich 5, der in der gezeigten Ausführungsform dem Anschlussbereich 7 gegenüberliegt, sind Kontaktlamellen als federgelagerte Kontaktmittel 9a - 9n angeordnet. In die Öffnung, die durch die kreisförmige Anordnung der federgelagerten Kontaktmittel 9a - 9n gebildet ist, kann ein korrespondierender Stiftkontakt (nicht gezeigt) hineingesteckt werden. Beim Hineinstecken des korrespondierenden Stiftkontakts werden die federgelagerten Kontaktmittel 9a - 9n zunächst von der Öffnung und dem korrespondierenden Stiftkontakt wegbewegt und drücken danach mit ihrer Federkraft auf den korrespondierenden Stiftkontakt auf und fixieren somit den korrespondierenden Stiftkontakt mechanisch. Gleichzeitig kontaktieren die federgelagerten Kontaktmittel 9a - 9n den korrespondierenden Stiftkontakt elektrisch.

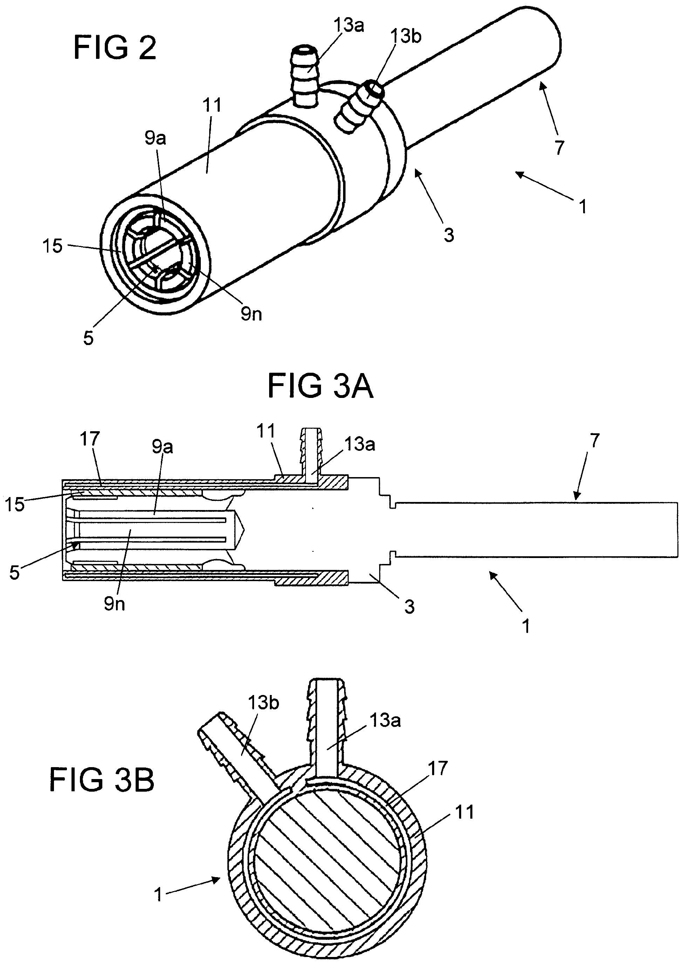

Weiterhin zeigt Figur 1A ein Kühlelement 11, das um den Kontaktbereich 5 des Kontaktelements 3 angeordnet werden kann. Das in Figur 1A gezeigte Kühlelement 11 ist hülsenförmig ausgebildet und wird daher als rundes, innen hohles und längliches Element gezeigt. In dem Material des Kühlelements 11 verläuft ein Kanal, der in den in Figuren 3A und 3B gezeigten Schnittdarstellungen näher gezeigt wird. In der gezeigten Ausführungsform befinden sich zwei Kanalanschlüsse 13a, 13b, die mit dem Kanal verbunden sind und auf die Rohrleitungen aufgesteckt werden können, die das Kühlfluid befördern. Beispielsweise kann eine Pumpe (nicht gezeigt) das Kühlfluid durch den Kanal pumpen.

Auch wird in Figur 1A ein Wärmeleitelement 15 gezeigt, das im zusammengebauten Zustand, wie es in Figur 2 gezeigt ist, zwischen dem Kühlelement 11 und dem Kontaktelement 3 angeordnet ist und eine Innenseite des Kühlelements 11 und eine Außenseite des Kontaktelements 3 thermisch und mechanisch kontaktiert. In Figur 1A wird das Wärmeleitelement 15 als ein keramikgefülltes Kunststoffmaterial gezeigt, das hülsenförmig ausgestaltet ist.

Figur 1B zeigt eine weitere Ansicht des Steckkontakts 1 gemäß der ersten Ausführungsform. Das gezeigte Kontaktelement 3 und das Kühlelement 11 sind die bereits in Figur 1A gezeigten Elemente. Das Wärmeleitelement 15 hingegen ist in Figur 1B als ein Gewebe oder Vlies aus Metalldrähten gezeigt.

Figur 2 zeigt eine Darstellung eines Steckkontakts 1 gemäß der ersten Ausführungsform in einem zusammengebauten Zustand. Das gezeigte Wärmeleitelement 15 kann das in Figur 1A oder Figur 1B gezeigte Wärmeleitelement 15 sein. Wie in Figur 2 gezeigt, ist das Wärmeleitelement 15 zwischen dem Kühlelement 11 und dem Kontaktelement 2 angerordnet und umgibt in der gezeigten Ausführungsform den Kontaktbereich 5 mit den federgelagerten Kontaktmitteln 9a - 9n.

Beim Einstecken des korrespondierenden Stiftkontakts können die federgelagerten Kontaktmittel 9a - 9n einen Federweg radial nach außen in Richtung des Wärmeleitelements 15 zurücklegen und das Wärmeleitelement 15 kann zumindest bereichsweise wegen der elastischen Ausgestaltung des Wärmeleitelementes 15 verdrängt werden, ohne dass es zu einem wesentlichen Anstieg der Stecknormalkraft des Steckkontakts 1 kommt.

In den Figuren 3A und 3B werden Schnittdarstellungen eines Steckkontakts 1 gemäß der ersten Ausführungsform gezeigt. Der gezeigte Steckkontakt 1 ist der zuvor in der Figur 2 gezeigte Steckkontakt 1.

In Figur 3A ist ein Schnitt durch den Steckkontakt 1 entlang einer Längsachse des Steckkontakts 1 gezeigt. In Figur 3B ist ein Schnitt durch den Steckkontakt 1 rechtwinklig zu der Längsachse des Steckkontakts 1 auf der Höhe der Kanalanschlüsse 13a, 13b gezeigt.

In der Ausführungsform, die in den Figuren 3A und 3B gezeigt wird, ist das Kühlelement 11 doppelwandig ausgestaltet und der Kanal 17 verläuft zwischen einer Innenwand und einer Außenwand in dem Material des Kühlelements 11.

Beispielsweise kann ein Zwischenraum als Kanal 17 zwischen den Außenflächen des Kühlelements 11 in dem Material des Kühlelements 11 angeordnet sein, um möglichst große Bereiche der Außenflächen für die Kühlung nutzen zu können.

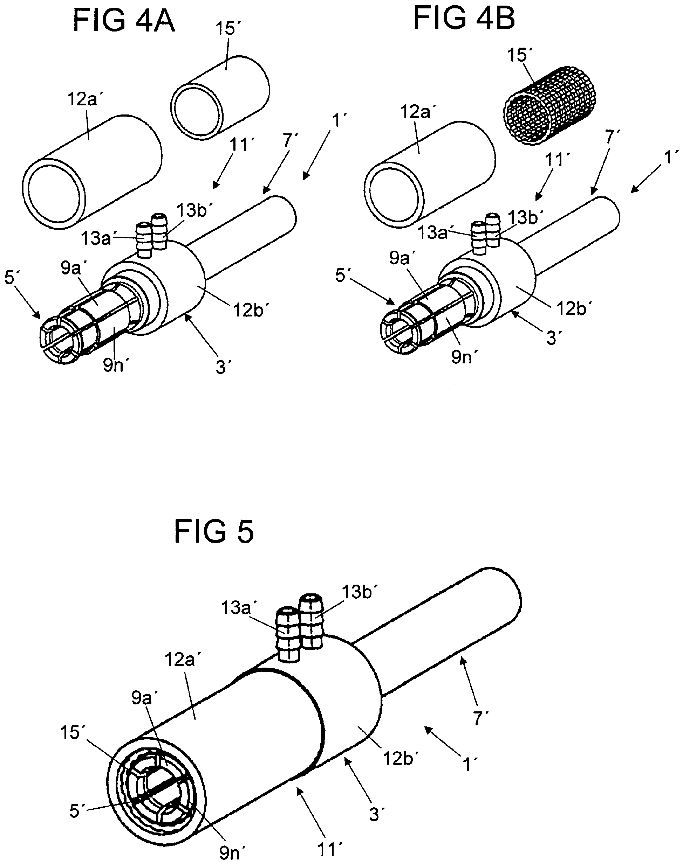

Die Figuren 4A und 4B zeigen Explosionsdarstellungen eines Steckkontakts 1' gemäß einer zweiten Ausführungsform.

Die in den Figuren 4A und 4B gezeigten Kontaktelemente 3' und Wärmeleitelemente 15' können die bereits zuvor, bezüglich der ersten Ausführungsform, gezeigten Kontaktelemente und Wärmeleitelemente sein. In Figur 4A wird das Wärmeleitelement 15' als ein keramikgefülltes Kunststoffmaterial gezeigt, das hülsenförmig ausgestaltet ist und in Figur 4B wird das Wärmeleitelement 15' als ein Gewebe oder Vlies aus Metalldrähten gezeigt.

In der gezeigten zweiten Ausführungsform ist das Kühlelement 11' zweiteilig ausgestaltet. Wie gezeigt, ist ein erster Kühlkörper 12a' zumindest bereichsweise um den Kontaktbereich 5' angeordnet, wobei der erste Kühlkörper 12a' ein Vollmaterial umfasst. Ein zweiter Kühlkörper 12b', aufweisend den Kanal zum Durchströmen mit dem Kühlfluid und den beiden Kanalanschlüssen 13a', 13b', die mit dem Kanal verbunden sind und auf die Rohrleitungen aufgesteckt, kann direkt auf das Kontaktelement 3' zwischen dem Kontaktbereich 5' und dem Anschlussbereich 7' angeordnet sein. In Ausführungsformen kann der zweite Kühlkörper 12b` auf das Kontaktelement 3' aufgesteckt sein oder einteilig mit dem Kontaktelement 3' ausgebildet sein.

Figur 5 zeigt eine Darstellung eines Steckkontakts 1' gemäß der zweiten Ausführungsform in einem zusammengebauten Zustand. Das gezeigte Wärmeleitelement 15' kann das in Figur 4A oder Figur 4B gezeigte Wärmeleitelement 15' sein. Wie in Figur 5 gezeigt, berühren sich der erste und der zweite Kühlkörper 12a', 12b' des zweiteilig ausgestalteten Kühlelements 11' im zusammengebauten Zustand und stellen somit den thermischen Kontakt her.

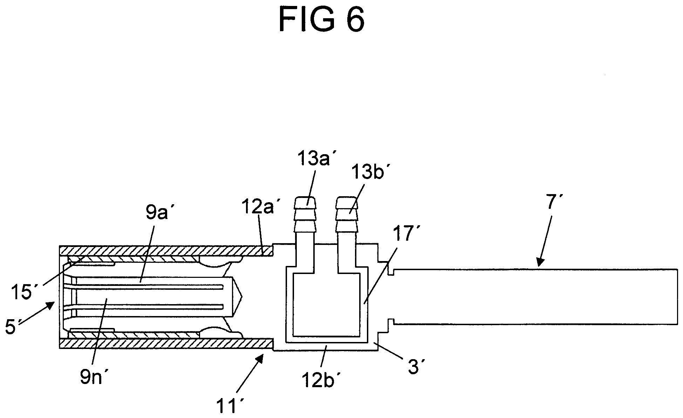

Figur 6 zeigt eine Schnittdarstellung eines Steckkontakts 1' gemäß der zweiten Ausführungsform. Im Unterschied zu den zuvor in den Figuren 3A und 3B gezeigten Schnittdarstellungen der ersten Ausführungsform, ist in dem ersten Kühlkörper 12a' des Kühlelements 11' kein Kanal angeordnet, der den Kontaktbereich 5' umgibt. Stattdessen umfasst der erste Kühlkörper 12a' ein Vollmaterial und der zweite Kühlkörper 12b' umfasst den Kanal und steht mit dem ersten Kühlkörper 12a' in einem thermischen Kontakt.

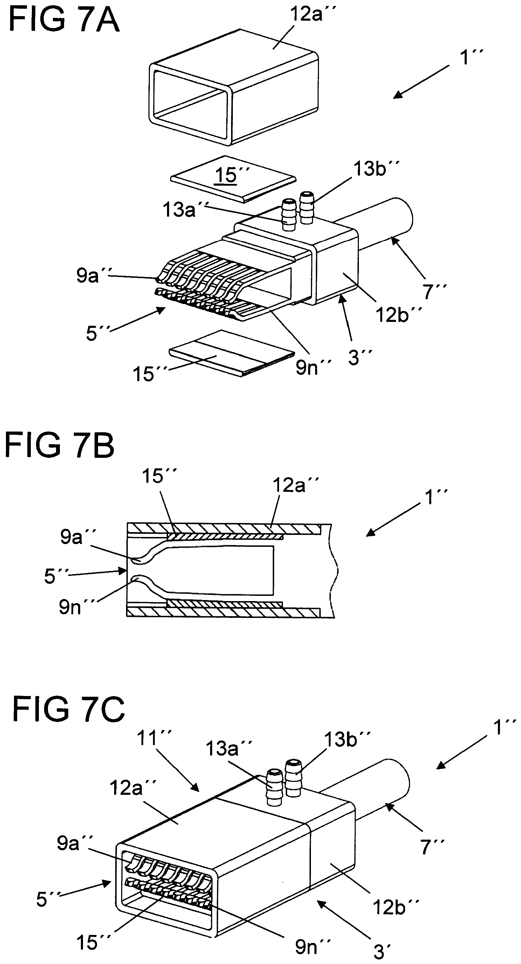

Die Figuren 7A - 7C zeigen Darstellungen eines Steckkontakts 1" gemäß einer dritten Ausführungsform.

In Figur 7A ist eine Explosionsdarstellungen des Steckkontakts 1" gemäß der dritten Ausführungsform gezeigt. Der gezeigte Steckkontakt 1" unterscheidet sich von den zuvor gezeigten Steckkontakten der ersten und zweiten Ausführungsform darin, dass die federgelagerten Kontaktmittel 9a" - 9n" in dem Kontaktbereich 5" in zwei Reihen angeordnet sind, zum Halten eines korrespondierenden Flachkontaktes. In der in den Figuren 7A - 7C gezeigten Ausführungsform ist das Kühlelement 11" rechteckig ausgebildet und das Wärmeleitelement 15" ist zweiteilig ausgebildet, um an den in zwei Reihen angeordneten federgelagerten Kontaktmittel 9a" - 9n" in dem Kontaktbereich 5" angeordnet werden zu können. In weiteren Ausführungsformen kann das Wärmeleitelement auch Seitenwände aufweisen.

In Figur 7B ist ein Schnitt durch den Kontaktbereich 5" entlang einer Längsachse des Steckkontakts 1" gezeigt. Figur 7C zeigt eine Darstellung des Steckkontakts 1" gemäß der dritten Ausführungsform in einem zusammengebauten Zustand.

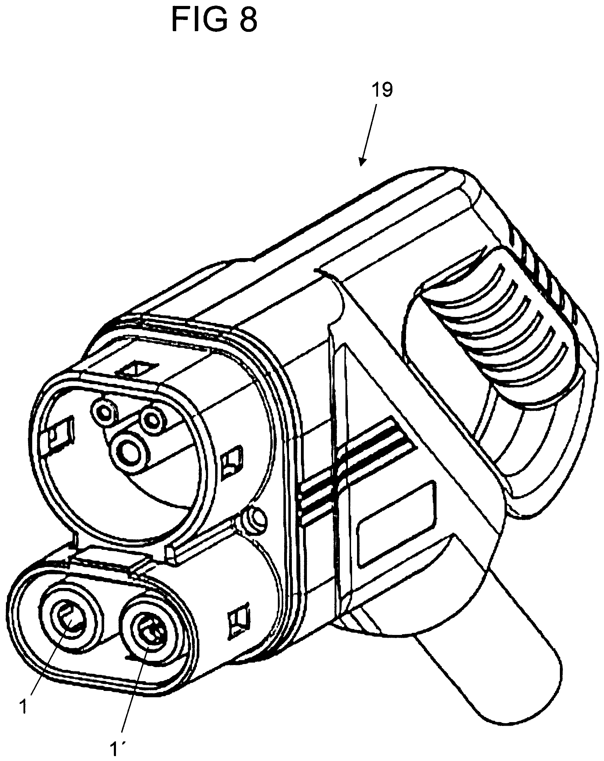

Figur 8 zeigt eine Ansicht eines Ladesteckverbinders 19 gemäß einer Ausführungsform. In Figur 8 wird beispielhaft der Ladesteckverbinder 19 als Ladesteckverbinder des Combined Charging System, CCS, Typ 2 gezeigt. In dem gezeigten Ladesteckverbinder 19 sind beispielhaft die beiden DC Kontakte als Steckkontakte 1, 1' gemäß der ersten und zweiten Ausführungsform gezeigt.

### Bezugszeichenliste

- 1, 1', 1": Steckkontakt
- 3, 3', 3": Kontaktelement
- 5, 5', 5": Kontaktbereich
- 7, 7', 7": Anschlussbereich
- 9a - 9n , 9a' - 9n', 9a" - 9n": federgelagertes Kontaktmittel
- 11, 11', 11": Kühlelement
- 12a', 12a", 12b', 12b": erster, zweiter Kühlkörper
- 13a, 13a', 13a", 13b, 13b', 13b": Kanalanschluss
- 15, 15', 15": Wärmeleitelement
- 17, 17': Kanal
- 19: Ladesteckverbinder

## Patentansprüche

1. Steckkontakt für einen elektrischen Ladesteckverbinder (19), aufweisend:
ein Kontaktelement (3, 3', 3"), aufweisend einen Kontaktbereich (5, 5', 5") mit zumindest einem federgelagerten Kontaktmittel (9a - 9n, 9a' - 9n', 9a" - 9n"), und einen Anschlussbereich (7, 7', 7") zum Anschluss eines elektrischen Leiters;
ein Kühlelement (11, 11', 11") angeordnet zumindest bereichsweise um den Kontaktbereich (5, 5', 5"); und
ein Wärmeleitelement (15, 15', 15") angeordnet zwischen dem Kühlelement (11, 11', 11") und dem Kontaktelement (3, 3', 3"), **dadurch gekennzeichnet, dass** das Wärmeleitelement (15, 15', 15")
elastisch ausgebildet ist und das Kühlelement (11, 11', 11") und das Kontaktelement (3, 3', 3") thermisch und mechanisch kontaktiert.

2. Steckkontakt nach Anspruch 1, **dadurch gekennzeichnet, dass** das Kontaktelement (3, 3', 3") als Buchsenkontakt ausgebildet ist zum Halten eines Bereichs eines in dem Kontaktbereich (5, 5', 5") anordenbaren korrespondierenden Steckkontakts, insbesondere eines Stiftkontaktes oder eines Flachkontaktes.

3. Steckkontakt nach Anspruch 2, **dadurch gekennzeichnet, dass** der Kontaktbereich (5, 5', 5") eine Vielzahl federgelagerter Kontaktmittel (9a - 9n, 9a' - 9n', 9a" - 9n"), insbesondere Kontaktlamellen, aufweist.

4. Steckkontakt nach einem der vorangehenden Ansprüche, **dadurch gekennzeichnet, dass** das Kühlelement (11, 11') und das Wärmeleitelement (15, 15') hülsenfömig ausgebildet sind.

5. Steckkontakt nach Anspruch 4, **dadurch gekennzeichnet, dass** das Kühlelement (11, 11') und das Wärmeleitelement (15, 15') koaxial um den Kontaktbereich (5, 5') des Kontaktelements (3, 3') angeordnet sind.

6. Steckkontakt nach einem der Ansprüche 1 bis 3, **dadurch gekennzeichnet, dass** das Kühlelement (11") und/oder das Wärmeleitelement (15") rechteckig ausgebildet sind.

7. Steckkontakt nach einem der vorangehenden Ansprüche, **dadurch gekennzeichnet, dass** das Kühlelement (11, 11', 11") zumindest einen Kanal (17, 17') in einem Material des Kühlelements (11, 11', 11") umfasst, zum Durchströmen mit einem Kühlfluid.

8. Steckkontakt nach Anspruch 7, **dadurch gekennzeichnet, dass** das Kühlelement (11, 11', 11") zumindest zwei Kanalanschlüsse (13a, 13a', 13a", 13b, 13b', 13b") umfasst.

9. Steckkontakt nach einem der Ansprüche 7 oder 8, **dadurch gekennzeichnet, dass** das Kühlelement (11) doppelwandig ausgestaltet ist und der Kanal (17) zwischen einer Innenwand und einer Außenwand des Kühlelements (11) verläuft.

10. Steckkontakt nach einem der Ansprüche 7 oder 8, **dadurch gekennzeichnet, dass** das Kühlelement (11', 11") mehrteilig ausgestaltet ist.

11. Steckkontakt nach Anspruch 10, **dadurch gekennzeichnet, dass** Kühlelement (11', 11") einen ersten Kühlkörper (12a', 12a") umfasst, angeordnet zumindest bereichsweise um den Kontaktbereich (5', 5"), wobei der erste Kühlkörper (12a', 12a") ein Vollmaterial umfasst, und
einen zweiten Kühlkörper (12b', 12b") umfasst, aufweisend den Kanal (17') zum Durchströmen mit dem Kühlfluid, wobei der zweite Kühlkörper (12b', 12b") in einem thermischen Kontakt mit dem ersten Kühlkörper (12a', 12a") steht.

12. Steckkontakt nach einem der vorangehenden Ansprüche, **dadurch gekennzeichnet, dass** das Wärmeleitelement (15, 15', 15") ein keramikgefülltes Kunststoffmaterial, ein Gewebe aus Metalldrähten oder ein Vlies aus Metalldrähten umfasst.

13. Elektrischer Ladesteckverbinder zum Aufladen eines Elektrofahrzeugs, aufweisend zumindest einen Steckkontakt (1, 1', 1") nach einem der Ansprüche 1 bis 12.

## Claims

1. Plug-in contact for an electrical charging plug-in connector (19), having:
a contact element (3, 3', 3") which has a contact region (5, 5', 5"), with at least one spring-mounted contact means (9a - 9n, 9a' - 9n', 9a" - 9n"), and a connection region (7, 7', 7") for connection of an electrical conductor;
a cooling element (11, 11', 11") which is arranged at least regionally around the contact region (5, 5', 5"); and
a heat-conducting element (15, 15', 15") which is arranged between the cooling element (11, 11', 11") and the contact element (3, 3', 3"),
**characterized in that** the heat-conducting element (15, 15', 15") is of elastic form and thermally and mechanically contacts the cooling element (11, 11', 11") and the contact element (3, 3', 3").

2. Plug-in contact according to Claim 1, **characterized in that** the contact element (3, 3', 3") is designed as a socket contact for holding a region of a corresponding plug-in contact, in particular a pin contact or a flat contact, which is able to be arranged in the contact region (5, 5', 5").

3. Plug-in contact according to Claim 2, **characterized in that** the contact region (5, 5', 5") has a multiplicity of spring-mounted contact means (9a - 9n, 9a' - 9n', 9a" - 9n"), in particular contact lamellae.

4. Plug-in contact according to one of the preceding claims, **characterized in that** the cooling element (11, 11') and the heat-conducting element (15, 15') are of sleeve-shaped form.

5. Plug-in contact according to Claim 4, **characterized in that** the cooling element (11, 11') and the heat-conducting element (15, 15') are arranged coaxially around the contact region (5, 5') of the contact element (3, 3').

6. Plug-in contact according to one of Claims 1 to 3, **characterized in that** the cooling element (11") and/or the heat-conducting element (15") are of rectangular form.

7. Plug-in contact according to one of the preceding claims, **characterized in that** the cooling element (11, 11', 11") comprises at least one channel (17, 17') in a material of the cooling element (11, 11', 11") for throughflow of a cooling fluid.

8. Plug-in contact according to Claim 7, **characterized in that** the cooling element (11, 11', 11") comprises at least two channel connections (13a, 13a', 13a", 13b, 13b', 13b").

9. Plug-in contact according to either of Claims 7 and 8, **characterized in that** the cooling element (11) is of double-walled form, and the channel (17) extends between an inner wall and an outer wall of the cooling element (11).

10. Plug-in contact according to either of Claims 7 and 8, **characterized in that** the cooling element (11', 11") is of multi-part form.

11. Plug-in contact according to Claim 10, **characterized in that** the cooling element (11', 11")
comprises a first cooling body (12a', 12a") which is arranged at least regionally around the contact region (5', 5"), wherein the first cooling body (12a', 12a") comprises a solid material, and
comprises a second cooling body (12b', 12b") which has the channel (17') for throughflow of the cooling fluid, wherein the second cooling body (12b', 12b") is in thermal contact with the first cooling body (12a', 12a").

12. Plug-in contact according to one of the preceding claims, **characterized in that** the heat-conducting element (15, 15', 15") comprises a ceramic-filled plastic material, a fabric of metal wires or a nonwoven of metal wires.

13. Electrical charging plug-in connector for charging an electric vehicle, having at least one plug-in contact (1, 1', 1") according to one of Claims 1 to 12.

## Revendications

1. Contact enfichable pour un connecteur enfichable de charge électrique (19), présentant :
un élément de contact (3, 3', 3"), présentant une zone de contact (5, 5', 5") avec au moins un moyen de contact (9a - 9n, 9a' - 9n', 9a" - 9n") monté sur ressort, et une zone de raccordement (7, 7', 7") pour le raccordement d'un conducteur électrique ;
un élément de refroidissement (11, 11', 11") agencé au moins par zones autour de la zone de contact (5, 5', 5") ; et
un élément conducteur de chaleur (15, 15', 15") agencé entre l'élément de refroidissement (11, 11', 11") et l'élément de contact (3, 3', 3"), **caractérisé en ce que** l'élément conducteur de chaleur (15, 15', 15") est réalisé sous forme élastique et établit un contact thermique et mécanique avec l'élément de refroidissement (11, 11', 11") et l'élément de contact (3, 3', 3").

2. Contact enfichable selon la revendication 1, **caractérisé en ce que** l'élément de contact (3, 3', 3") est réalisé sous forme de contact femelle pour maintenir une zone d'un contact enfichable correspondant pouvant être agencé dans la zone de contact (5, 5', 5"), notamment un contact à broche ou un contact plat.

3. Contact enfichable selon la revendication 2, **caractérisé en ce que** la zone de contact (5, 5', 5") présente une pluralité de moyens de contact (9a - 9n, 9a' - 9n', 9a" - 9n") montés sur ressort, notamment des lamelles de contact.

4. Contact enfichable selon l'une quelconque des revendications précédentes, **caractérisé en ce que** l'élément de refroidissement (11, 11') et l'élément conducteur de chaleur (15, 15') sont réalisés sous forme de manchon.

5. Contact enfichable selon la revendication 4, **caractérisé en ce que** l'élément de refroidissement (11, 11') et l'élément conducteur de chaleur (15, 15') sont agencés coaxialement autour de la zone de contact (5, 5') de l'élément de contact (3, 3').

6. Contact enfichable selon l'une quelconque des revendications 1 à 3, **caractérisé en ce que** l'élément de refroidissement (11") et/ou l'élément conducteur de chaleur (15") sont réalisés sous forme rectangulaire.

7. Contact enfichable selon l'une quelconque des revendications précédentes, **caractérisé en ce que** l'élément de refroidissement (11, 11', 11") comprend au moins un canal (17, 17') dans un matériau de l'élément de refroidissement (11, 11', 11"), pour le passage d'un fluide de refroidissement.

8. Contact enfichable selon la revendication 7, **caractérisé en ce que** l'élément de refroidissement (11, 11', 11") comprend au moins deux raccords de canal (13a, 13a', 13a", 13b, 13b', 13b").

9. Contact enfichable selon l'une quelconque des revendications 7 ou 8, **caractérisé en ce que** l'élément de refroidissement (11) est conçu à double paroi et le canal (17) s'étend entre une paroi intérieure et une paroi extérieure de l'élément de refroidissement (11).

10. Contact enfichable selon l'une quelconque des revendications 7 ou 8, **caractérisé en ce que** l'élément de refroidissement (11', 11") est conçu en plusieurs parties.

11. Contact enfichable selon la revendication 10, **caractérisé en ce que** l'élément de refroidissement (11', 11") comprend un premier corps de refroidissement (12a', 12a"), agencé au moins par zones autour de la zone de contact (5', 5"), le premier corps de refroidissement (12a', 12a'') comprenant un matériau plein, et
comprend un deuxième corps de refroidissement (12b', 12b"), présentant le canal (17') pour le passage du fluide de refroidissement, le deuxième corps de refroidissement (12b', 12b") étant en contact thermique avec le premier corps de refroidissement (12a', 12a").

12. Contact enfichable selon l'une quelconque des revendications précédentes, **caractérisé en ce que** l'élément conducteur de chaleur (15, 15', 15") comprend un matériau plastique chargé de céramique, un tissu de fils métalliques ou un non-tissé de fils métalliques.

13. Connecteur enfichable de charge électrique pour la recharge d'un véhicule électrique, présentant au moins un contact enfichable (1, 1', 1") selon l'une quelconque des revendications 1 à 12.
